# EUROPEAN PATENT APPLICATION

(11) **EP 4 316 967 A1**
(43) Date of publication of application: **07.02.2024**
(21) Application number: 23189223.3
(22) Date of filing: 02.08.2023
(51) Int. Cl.: B62M 23/02, B62K 11/04, B62M 7/04, B62K 19/30, B60K 5/04, B60K 5/12, B60K 6/24, B60K 6/26, B60K 6/40, B60K 6/405, B60K 1/00, B60K 5/00

(54) **SADDLE-RIDING VEHICLE**

(30) Priority: 03.08.2022 JP 2022124227
(71) Applicant: Kawasaki Motors, Ltd., Akashi, Hyogo 673-8666 (JP)
(72) Inventor: UENO, Shusei, HYOGO, 673-8666 (JP)
(74) Representative: Dr. Gassner & Partner mbB

(57) **Abstract**

A saddle-riding vehicle includes a power unit PU including: an engine E which is located between front and rear wheels 8, 16 and produces drive power; and an electric motor M which is secured to the engine E and produces drive power. The power unit PU is supported by a vehicle body frame FR, at opposite sides of the electric motor M in a longitudinal direction of the vehicle.

## Description

### CROSS REFERENCE TO THE RELATED APPLICATION

This application is based on and claims Convention priority to Japanese patent application No. 2022-124227, filed August 3, 2022, the entire disclosure of which is herein incorporated by reference as a part of this application.

### BACKGROUND OF THE INVENTION

### (Field of the Invention)

This application relates to a saddle-riding vehicle including an engine and an electric motor, each serving as a drive source for the vehicle.

### (Description of Related Art)

A hybrid saddle-riding vehicle includes an engine and an electric motor, each serving as a drive source for the vehicle (e.g., JP Laid-open Patent Publication No. 2021-008216).

A saddle-riding vehicle including an electric motor, however, requires a vehicle body frame with a higher rigidity than that of a saddle-riding vehicle which includes an engine as the only drive source. Yet, increasing the size of the vehicle body frame or additionally providing a reinforcing frame for the purpose of achieving increased rigidity is associated with weight increase.

### SUMMARY OF THE INVENTION

The disclosure of this application is directed to providing a hybrid saddle-riding vehicle, a reduction of the rigidity of which has successfully been prevented by means other than an increase in the rigidity of a vehicle body frame itself.

The present disclosure provides a saddle-riding vehicle which includes a power unit including: an engine which is located between front and rear wheels and produces drive power; and an electric motor which is secured to the engine and produces drive power. The power unit is supported by a vehicle body frame, at opposite sides of the electric motor in a longitudinal direction of the vehicle.

According to a saddle-riding vehicle in accordance with the present disclosure, the power unit is supported by the vehicle body frame, at the opposite sides of the electric motor in a longitudinal direction of the vehicle. This configuration allows the electric motor to be used as a rigid member that participates in the transmission of a load through the vehicle body frame in the longitudinal direction. As a consequence, this configuration can successfully prevent a reduction of the rigidity of the vehicle and obviates the need to increase the rigidity of the vehicle body frame itself.

Any combinations of at least two features disclosed in the claims and/or the specification and/or the drawings should also be construed as encompassed by the present disclosure. Especially, any combinations of two or more of the claims should also be construed as encompassed by the present disclosure.

### BRIEF DESCRIPTION OF THE DRAWINGS

The present disclosure will be more clearly understood from the following description of preferred embodiments made by referring to the accompanying drawings. However, the embodiments and the drawings are given merely for the purpose of illustration and explanation, and should not be used to delimit the scope of the present disclosure, which scope is to be delimited by the appended claims. In the accompanying drawings, alike numerals are assigned to and indicate alike parts throughout the different figures, and:
Fig. 1 shows a side view of a motorcycle which is one type of a hybrid saddle-riding vehicle in accordance with a first embodiment of the present disclosure;
Fig. 2 shows a perspective view of a vehicle body frame of the motorcycle;
Fig. 3 shows a perspective view of an engine of the motorcycle, as viewed diagonally and laterally from the rear;
Fig. 4 shows a perspective view of an electric motor of the motorcycle, as viewed diagonally and laterally from the front; and
Fig. 5 shows a side view of a power unit and the vehicle body frame of the motorcycle.

### DESCRIPTION OF EMBODIMENTS

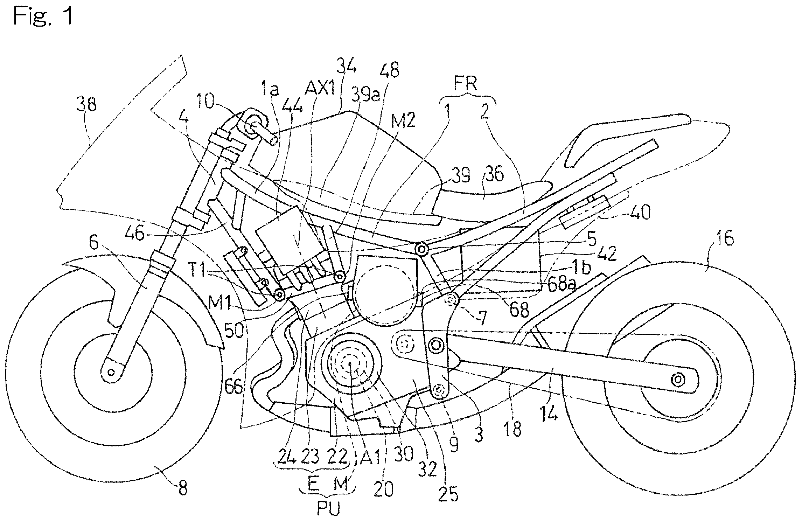

What follows is a description of preferred embodiments of the present disclosure made with reference to the drawings. Fig. 1 shows a side view of a motorcycle which is one type of a hybrid saddle-riding vehicle in accordance with a first embodiment of the present disclosure. The terms "right" and "rightward" and the terms "left" and "leftward" used herein refer to sides facing "the right" and "the left" of a vehicle, respectively, as viewed from a driver seated in the vehicle. Accordingly, a left-to-right or right-to-left direction coincides with a vehicle widthwise direction. Moreover, the terms "front" and "forward" and the terms "rear" and "rearward" used herein refer to sides facing "the front" and "the rear" of a vehicle, respectively, along the direction of travel of the vehicle. Accordingly, a longitudinal direction of a vehicle coincides with a front-to-rear or rear-to-front direction for the vehicle. A vehicle widthwise inside refers to a side facing towards the longitudinally extending centerline of a vehicle body, and a vehicle widthwise outside of the vehicle body refers to a side facing away from that centerline of the vehicle body.

The motorcycle in the instant embodiment includes a power unit PU including an internal combustion engine E that serves as a first power source for the vehicle and an electric motor M that serves as a second power source for the vehicle. Hence, the motorcycle in the embodiment is configured to be able to gain - depending on the modes of operation - the sole traction from the engine E in the form of an internal combustion engine, the sole traction from the electric motor M in the form of an electric motor, or traction from the simultaneous use of the engine E and the electric motor M.

The motorcycle includes a vehicle body frame FR which is, in the instant embodiment, formed of a frame assembly of connected frame members that are welded to each other. In particular, the vehicle body frame FR includes: a main frame 1 that is formed of welded pipe members and makes up the front half; a rear frame 2 that is formed of welded pipe members and makes up the rear half; and a pivot frame 3 by which a swingarm is supported. The main frame 1 extends diagonally downwards from a front-end head pipe 4 towards the rear. The pivot frame 3 extends downwards in a vertical direction from the rear portion of the main frame 1 in a curvilinear manner. The rear frame 2 extends from the rear portion of the main frame 1 towards the rear.

More specifically, the main frame 1 includes: a first frame piece 1a branching into two legs in a vehicle widthwise direction from the head pipe 4, extending diagonally downwards towards the rear, and connecting to a first cross pipe 5; and a second frame piece 1b extending downwards from the first cross pipe 5 and connecting to a second cross pipe 7. The rear frame 2 is connected with the first cross pipe 5 and extends from the first cross pipe 5 towards the rear. The first and second cross pipes 5, 7 extend in the vehicle widthwise direction. As viewed laterally, the main frame 1 passes above the electric motor M.

A front fork 6 is supported by the head pipe 4. The front fork 6 has a lower end at which a front wheel 8 is supported and has an upper end to which a steering handle 10 is mounted.

The pivot frame 3 is arranged at the rear end of the main frame 1. The pivot frame 3 is made of a planar material extending in a vertical direction and has an upper end that connects to the second cross pipe 7 and a lower end that connects to a third cross pipe 9. A swingarm 14 is supported by the pivot frame 3 so as to be swingable in a vertical direction. A rear wheel 16 is mounted to the rear end of the swingarm 14.

The engine E is located between the front wheel 8 and the rear wheel 16 below the main frame 1. The engine E is supported by the abovementioned vehicle body frame FR. Power from the engine E is transmitted through a power transmission member 18 to the rear wheel 16 to drive the rear wheel 16. The power transmission member 18 includes a drive chain, for example. Nevertheless, the drive chain is one of non-limiting examples of the power transmission member 18. The power transmission member 18 is coupled to an output shaft of a speed reducer, which will be later discussed, to transmit drive power transferred through that output shaft, into the rear wheel 16 that serves as a drive wheel.

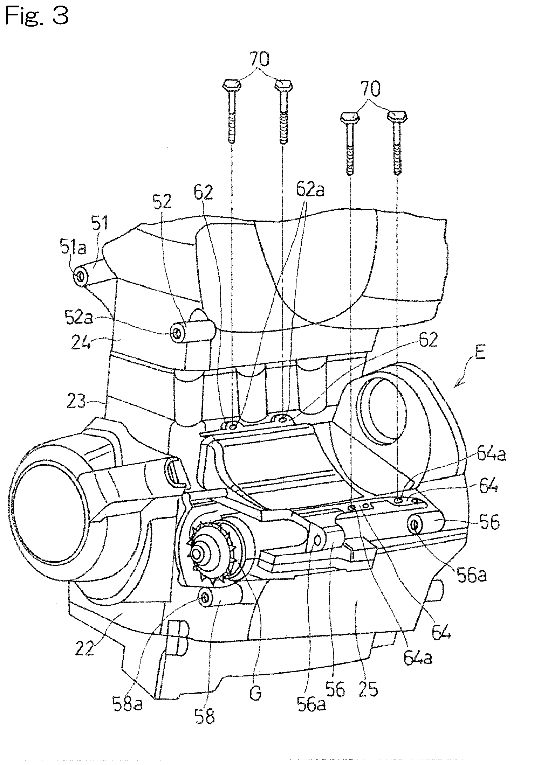

The engine E includes a crankshaft 20 extending in a vehicle widthwise direction, a crankcase 22 in which the crankshaft 20 is housed in a rotatably supported manner, a cylinder 23 projecting upwards from the crankcase 22, and a cylinder head 24 present thereabove. In the instant embodiment, the cylinder 23 and the cylinder head 24 cooperate to define an axis AX1 which is inclined to the front as it extends upwards. The crankcase 22 includes, in a region rearward of the crankshaft 20, a speed reducer housing 25 in which the speed reducer G (Fig. 3) is housed.

As viewed laterally, the unit containing the crankcase 22 and the cylinder head 24 has a substantially L-shaped configuration. The electric motor M is positioned rearwards of the cylinder 23 and upwards of the speed reducer housing 25 of the crankcase 22. In other words, the electric motor M is positioned in a space above the crankcase 22 that is located in front of the rear end of the crankcase 22. Drive power from the electric motor M is transferred to an input shaft of the speed reducer through a power transfer mechanism. The details on features used to support the engine E and the electric motor M will be discussed later.

The crankshaft 20 is provided with a generator 30, on one side of the crankshaft 20 where one of the axial ends of the crankshaft 20 is situated and which is a left side in the instant embodiment. The generator 30 in the instant embodiment is an integrated starter generator (ISG). The generator 30 generates electrical power from the mechanical power from the engine E, that is, from rotations of the crankshaft 20. The generator 30 is covered from the vehicle widthwise outside by a generator cover 32 which is removably attached to the left lateral surface of the crankcase 22.

A fuel tank 34 is disposed on the top of the main frame 1, and a seat 36 is mounted to the rear frame 2 so that a driver can be seated thereon. The fuel tank 34 is located directly above the engine E so as to extend rearwards of the head pipe 4 and forwards of the seat 36.

The front half of the vehicle body is provided with a fairing 38 made of resin, as indicated with a double dotted line. The fairing 38 in the instant embodiment covers the space spanning between a region in front of the head pipe 4 and a region lateral to the engine E.

A pair of left and right knee grip covers 39 are arranged below the fuel tank 34, as indicated with a double dotted line. The knee grip covers 39 cover, from the outside, a lateral space spanning from a region below and forward of the seat 36. Each of the knee grip covers 39 has a recess 39a formed therein which is set back towards the vehicle widthwise inside. The recess 39a forms a respective one of knee grip sections to be clamped by the knees of a driver during driving. In the instant embodiment, the knee grip sections are formed in such regions to be situated upwards of the traction electric motor M and the cylinder head 24.

A rear fender 40 is arranged above the rear wheel 16, as indicated with a double dotted line. The rear fender 40 prevents the dirt, water, etc. that are splashed up by the rear wheel 16 from reaching towards a driver. A battery 42 is stored inside the rear fender 40. The battery 42 in the instant embodiment is a 48V lithium-ion battery which is, however, one of non-limiting configurations of the battery 42.

The motorcycle in the instant embodiment includes, on a lateral space above the engine E, an inverter 44 which feeds the battery 42 with the output from the generator 30. The inverter 44 in the instant embodiment is a combined inverter and DC/DC converter. Accordingly, the inverter 44 in the instant embodiment feeds the 48V traction battery 42 with the output from the generator 30 and also converts it to, for example, 12V voltage to power a battery (not shown) used as a power supply for a controller.

The output from the generator 30 is fed to the battery 42 through the inverter 44 so as to recharge the battery 42. In particular, the generator 30 is an AC generator whose output is converted to DC power through the inverter 44 to power the traction battery 42. The power charged in the battery 42 is fed to the electric motor M so as to drive the electric motor M. During the EV operation mode and the hybrid operation mode, drive power from the electric motor M is transmitted through the power transmission member 18 to the rear wheel 16. At the time of starting the engine, power is supplied to the generator 30 from the battery 42 so that the generator 30 acts as a starter.

Features used to support the engine E and the electric motor M in cooperation with the vehicle body frame FR will be discussed. The vehicle body frame FR includes a third frame piece 46 extending in a vertical direction and forwards of the cylinder head 24, and a fourth frame piece 48 extending in a vertical direction and rearwards of the cylinder head 24. The third frame piece 46 extends diagonally downwards towards the rear, from a point on the head pipe 4 that is located below the point of connection of the main frame 1 to the head pipe 4. The fourth frame piece 48 extends slightly diagonally downwards towards the rear, from a middle point of the first frame piece 1a of the main frame 1 in a longitudinal direction. Each of the third and fourth frame pieces 46, 48 includes a pair of frame pieces that are spaced apart in a vehicle widthwise direction.

The third and fourth frame pieces 46, 48 have lower ends that are provided with first and second mount parts M1, M2, respectively. A first connection member 50 extending in a longitudinal direction connects the first mount part M1 and the second mount part M2. The first connection member 50 is located on the vehicle widthwise outside with respect to the cylinder 23. The cylinder head 24 is coupled, at a front portion thereof, to the first mount part M1 with the use of a fastener T 1 such as a bolt. The cylinder head 24 is also coupled, at a rear portion thereof, to the second mount part M2 with the use of a fastener T1 such as a bolt.

The cylinder head 24 can be rigidly fixed to the frame by being coupled along a longitudinal direction at the mount parts M1, M2 with the use of such coupling members. Both of the first mount part M1 and the second mount part M2 are located on each side in a vehicle widthwise direction. In other words, each of the third and fourth frame pieces 46, 48 includes frame pieces on the left and the right. The cylinder head 24 is positioned between a pair of such third frame pieces 46. The front part of the cylinder head 24 is clamped in a vehicle widthwise direction between the pair of such third frame pieces 46 with the aid of fasteners. Likewise, the cylinder head 24 is positioned between a pair of such fourth frame pieces 48. The rear part of the cylinder head 24 is clamped in a vehicle widthwise direction between the pair of such fourth frame pieces 48 with the aid of fasteners. By each of the pairs of such third and fourth frame pieces 46, 48 being coupled from the left and the right so as to sandwich the cylinder head 24, the cylinder head 24 can be used as a rigid member which cooperates with the vehicle body frame FR in such a manner to minimize the level of torsional deformation of the vehicle body frame FR.

More specifically, as depicted in Fig. 3, the cylinder head 24 includes first and second supportable parts 51, 52 at front and rear portions thereof, respectively. The first and second supportable parts 51, 52 in the instant embodiment are in the form of cylindrical bosses each defining an axis extending in a vehicle widthwise direction. The first and second supportable parts 51, 52 have hollow sections that include threaded holes 51a, 52a oriented towards the vehicle widthwise outside, and the first mount part M1 and the second mount part M2 are fastened to the threaded holes 51a, 52a. Thus, the cylinder 23 and the cylinder head 24 are coupled, at front and rear portions thereof, to the vehicle body frame FR.

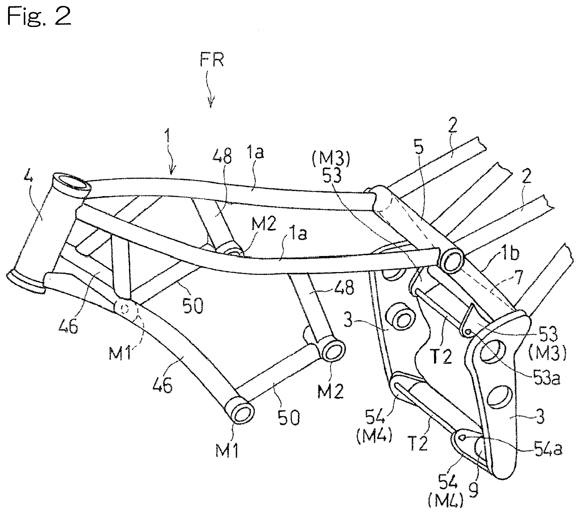

As depicted in Fig. 2, the second cross pipe 7 is provided with a third mount part M3. The third cross pipe 9 is provided with a fourth mount part M4. More specifically, a pair of first stays 53 are fixed to the second cross pipe 7 so as to be spaced apart in a vehicle widthwise direction, and cooperate to form the third mount part M3. Further, a pair of second stays 54 are fixed to the third cross pipe 9 so as to be spaced apart in a vehicle widthwise direction, and cooperate to form the fourth mount part M4.

The crankcase 22 is coupled, at an upper rear portion thereof, to the third mount part M3 with the use of a fastener T2 such as a through bolt. The crankcase 22 is coupled, at a lower rear portion thereof, to the fourth mount part M4 with the use of a fastener T2 such as a through bolt.

In particular, the crankcase 22 has an upper rear end that is provided with a third supportable part 56 projecting therefrom towards the rear. The third supportable part 56 in the instant embodiment includes two supportable parts that have cylindrical shapes each defining an axis in a vehicle widthwise direction and that are spaced apart in a vehicle widthwise direction. Such two, third supportable parts 56 are positioned between the pair of first stays 53. A through bolt T2 is inserted into through holes 53a in the first stays 53 and hollow holes 56a in those third supportable parts 56, and is tightened with a nut (not shown). In this way, the crankcase 22 is coupled, at an upper rear end thereof, to the third mount part M3.

The crankcase 22 has a lower rear end that is provided with a fourth supportable part 58 projecting therefrom towards the rear. The fourth supportable part 58 in the instant embodiment includes two supportable parts that have cylindrical shapes each defining an axis in a vehicle widthwise direction and that are spaced apart in a vehicle widthwise direction. Such two, fourth supportable parts 58 are positioned between the two, second stays 54. 54. A through bolt T2 is inserted into through holes 54a in the second stays 54 and hollow holes 58a in those fourth supportable parts 58, and is tightened with a nut (not shown). In this way, the crankcase 22 is coupled, at a lower rear end thereof, to the fourth mount part M4.

The crankcase 22 can be rigidly fixed to the frame through the mount parts M3, M4 that are coupled to each other by the pivot frame 3 along a vertical direction. Both of the third mount part M3 and the fourth mount part M4 are located on each side in a vehicle widthwise direction. In other words, the first stays 53 and the second stays 53, 54 are each composed of respective stays on the left and the right. The upper rear end of the crankcase 22 is clamped in a vehicle widthwise direction between a pair of such first stays 53 with the aid of a fastener. Likewise, the lower rear end of the crankcase 22 is clamped in a vehicle widthwise direction between a pair of such second stays 54 with the aid of a fastener. By each of the pairs of such first and second stays 53, 54 being coupled from the left and the right so as to sandwich the rear part of the crankcase 22, the crankcase 22 can be used as a rigid member which cooperates with the vehicle body frame FR in such a manner to minimize the level of torsional deformation of the vehicle body frame FR. In the supported position of the electric motor M on the frame, the second mount part M2 is positioned below the top end of the electric motor M. Further, the third mount part M3 is positioned above the bottom end of the electric motor M.

Hence, the engine E is coupled to the vehicle body frame FR through the first to fourth mount parts M1 to M4. For this reason, the engine E plays the role of a rigid member which cooperates with the vehicle body frame FR

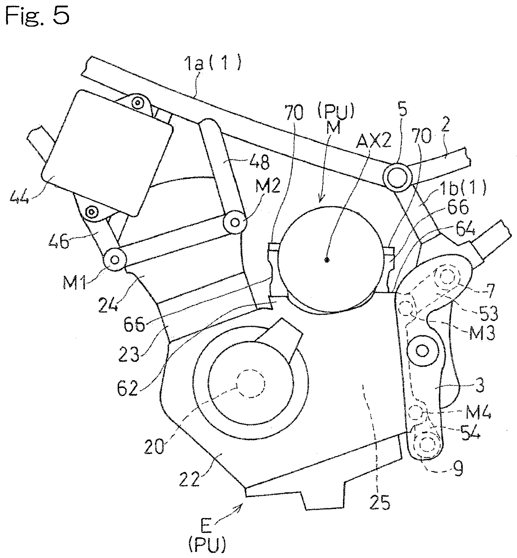

As depicted in Fig. 5, as viewed laterally, the crankcase 22 is positioned so as to extend on the straight line connecting the first mount part M1 and the fourth mount part M4. Accordingly, the crankcase 22 plays the role of a rigid member that counteracts the relative displacement between the first mount part M1 and the fourth mount part M4. Further, as viewed laterally, a casing of the electric motor is positioned in a manner that will be discussed later, so as to extend on the straight line connecting the second mount part M2 and the third mount part M3. Accordingly, the casing of the electric motor plays the role of a rigid member that counteracts the relative displacement between the second mount part M2 and the third mount part M3. Thus, a frame piece that connects the first mount part M1 and the fourth mount part M4 or a frame piece that connects the second mount part M2 and the third mount part M3 can be dispensed with in the instant embodiment.

As depicted in Fig. 3, the electric motor M is externally formed in a cylindrical shape and is secured to the engine E. In particular, the electric motor M defines an axis AX2 of rotation extending in a vehicle widthwise direction, and the electric motor M includes a casing 60 secured at front and rear ends thereof to the engine E. More specifically, as depicted in Fig. 3, the crankcase 22 includes a first electric motor couplable part 62 at which the electric motor M is coupled at a front portion thereof and a second electric motor couplable part 64 at which the electric motor M is coupled at a rear portion thereof.

The speed reducer housing 25 of the crankcase 22 has a top surface which is formed in a curvilinear shape with a downward concavity defined in a conforming manner to the external shape of the electric motor M. In other words, the speed reducer housing 25 of the crankcase 22 has a top surface which is indented such that a middle portion thereof in a longitudinal direction is located downwards of opposite end portions thereof in the longitudinal direction. This can achieve the arrangement of the axis of rotation of the electric motor M in a lower position than that when the crankcase 22 has a flat top surface. Further, arranging the top surface of the crankcase 22 such that opposite end portions thereof in a longitudinal direction are located upwards of a middle portion thereof in the longitudinal direction can achieve the vertical thickening of the opposite end portions in the longitudinal direction and can therefore facilitate the formation of coupling parts for the electric motor M. Furthermore, such a configuration of coupling parts for the electric motor M can achieve a high support stiffness for the electric motor M installed at the opposite end portions of the crankcase 22 in a longitudinal direction.

The first electric motor couplable part 62 is arranged on a portion of the top surface of the crankcase 22 which adjoins the cylinder 23. In particular, the first electric motor couplable part 62 is formed so as to extend rearwards of the cylinder 23 and between the cylinder 23 and the electric motor M. In other words, the first electric motor couplable part 62 is arranged so as to extend rearwards of the second supportable part 52 formed on the cylinder head 24 and between the second supportable part 52 and the cylindrical casing body of the electric motor M. The first electric motor couplable part 62 includes a threaded hole 62a oriented upwards. The threaded hole 62a extends along an imaginary plane perpendicular to the axis of rotation of the electric motor M. The threaded hole 62a in the instant embodiment extends in a vertical direction. The first electric motor couplable part 62 in the instant embodiment includes two electric motor couplable parts aligned in a vehicle widthwise direction. The first electric motor couplable part 62 is located so as to extend downwards of and in close proximity to the second supportable part 52 of the cylinder head 24. With respect to a vehicle widthwise direction, such two, first electric motor couplable parts 62 are situated between two, second supportable parts 52.

The threaded hole 62a extends along an imaginary extension of the fourth frame piece 48. For this reason, the bearing of a load on the first electric motor couplable part 62 through the fourth frame piece 48 can be facilitated. Consequently, the first electric motor couplable part 62 can bear a part of a load transferred through the fourth frame piece 48 into the crankcase 22. As depicted in Fig. 3, the cylinder 23 is formed to have bosses aligned in a vehicle widthwise direction for coupling to the crankcase 22. The first electric motor couplable part 62 is positioned between those bosses aligned in a vehicle widthwise direction. In this way, the first electric motor couplable part 62 can be brought closer to the cylinder 23 in a longitudinal direction without interfering with the bosses.

The second electric motor couplable part 64 is arranged on a rear end portion of the top surface of the crankcase 22. The second electric motor couplable part 64 is arranged so as to extend forwards of the third supportable part 56 formed on the crankcase 22 and between the third supportable part 56 and the cylindrical casing body of the electric motor M. The second electric motor couplable part 64 includes a threaded hole 64a oriented upwards. The threaded hole 64a extends along an imaginary plane perpendicular to the axis of rotation of the electric motor M. The threaded hole 64a in the instant embodiment extends in a vertical direction. The second electric motor couplable part 64 in the instant embodiment includes two electric motor couplable parts aligned in a vehicle widthwise direction. The second electric motor couplable part 64 is located so as to extend forwards of and in close proximity to the third supportable part 56. With respect to a vehicle widthwise direction, at least one of such second electric motor couplable parts 64 is situated between two, third supportable parts 56.

The threaded hole 64a extends generally parallel to and along the pivot frame 3. For this reason, the bearing, on the second electric motor couplable part 64, of a vertical load applied to the pivot frame 3 can be facilitated. As depicted in Fig. 3, with respect to a vehicle widthwise direction, the second electric motor couplable part 64 is situated between two, third supportable parts 56. In this way, the second electric motor couplable part 64 can be brought closer to the third supportable part 56 in a longitudinal direction without interfering with the third supportable part 56. Moreover, with respect to a vertical direction, the second electric motor couplable part 64 is formed so as to be situated at the same height as that of the third supportable part 56. More specifically, the bottom end of the threaded hole 64a is positioned below the bottom end of the third supportable part 56, and the top end of the threaded hole 64a is positioned above the top end of the third supportable part 56. Since, in this way, the second electric motor couplable part 64 and the third supportable part 56 are situated at the same height in a vertical direction, the transfer, to the second electric motor couplable part 64, of a load applied to the third supportable part 56 can be facilitated.

With respect to a longitudinal direction of the vehicle, the first and second electric motor couplable parts 62, 64 are located between the second supportable part 52 and the third supportable part 56. More specifically, the first electric motor couplable part 62 is located in close proximity to the second supportable part 52. In the instant embodiment, in the supported position of the electric motor M on the frame, the second mount part M2 is positioned below the top end of the electric motor M such that the first electric motor couplable part 62 and the second supportable part 52 are located in close proximity to each other. In the instant embodiment, the second supportable part 52 is arranged at a portion of the cylinder head 24 projecting rearwards of the rear end of the cylinder such that the second supportable part 52 and the first electric motor couplable part 62 are located in close proximity to each other in a longitudinal direction of the vehicle. In the instant embodiment, the first electric motor couplable part 62 is arranged substantially directly below the second supportable part 52.

The second electric motor couplable part 64 is located forwards of and in close proximity to the third supportable part 56. In the instant embodiment, in the supported position of the electric motor M on the frame, the third mount part M3 is positioned above the bottom end of the electric motor M such that the second electric motor couplable part 64 and the third supportable part 56 are located in close proximity to each other. In the instant embodiment, the third supportable part 56 is arranged at a portion of the crankcase 22 projecting rearwards of the remainder of the crankcase 22 such that the third supportable part 56 and the second electric motor couplable part 64 are located in close proximity to each other in a longitudinal direction of the vehicle. In the instant embodiment, the second electric motor couplable part 64 is arranged directly behind the third supportable part 56.

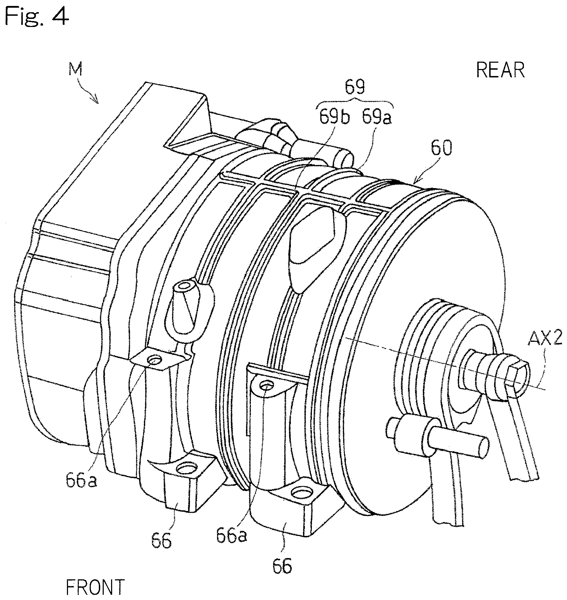

Turning to Fig. 4, the casing 60 of the electric motor M has a cylindrical shape defining an axis extending in a vehicle widthwise direction and includes, on the outer periphery thereof, a rib 69 projecting radially outwards therefrom. The rib 69 in the instant embodiment includes a plurality of (or four in the instant embodiment) circumferential ribs 69a extending in a circumferential direction and an axial rib 69b extending in an axial direction. The provision of the rib 69 increases the rigidity of the casing 60.

The casing 60 of the electric motor M has, at front and rear ends thereof, first and second attachment parts 66, 68, respectively. It should be noted that the second attachment part 68 is visible in Fig. 1. Each of the first and second attachment parts 66, 68 in the instant embodiment includes a cylindrical boss protruding radially outwards of the casing and defining an axis oriented in a vertical direction. That is, each of the first and second attachment parts 66, 68 includes a thorough bore 66a, 68a oriented in a vertical direction. In other words, each of the through bores 66a, 68a extends along a direction tangent to a given one of the circumferential ribs 69a. In the instant embodiment, each of the first and second attachment parts 66, 68 includes two attachment parts aligned in a vehicle widthwise direction.

The circumferential ribs 69a include a rib extending in such a manner to bridge the first attachment part 66 and the second attachment part 68. Such a rib may connect to a projection element projecting radially form the casing 60. The projection element may include an opening through which a coolant enters or exits the casing, or a sensor mount to which a temperature sensor, etc. can be mounted. The casing 60 of the electric motor M is constructed to include a cylindrically shaped component and a lid component for axial closure of the same.

A fastener 70 such as a bolt is inserted, from above in Fig. 3, into a respective one of the through bores 66a, 68a of the first and second attachment parts 66, 68 and tightened into a respective one of the threaded holes 62a, 64a of the first and second electric motor couplable parts 62, 64. In this way, the electric motor M is coupled to the engine E at each of a location proximate to the front side of the electric motor M and a location proximate to the rear side of the electric motor M - namely, at locations proximate to the engine mount parts M2, M3 in Fig. 1. Accordingly, the electric motor M, in addition to the engine E, plays the role of a rigid member that cooperates with the vehicle body frame FR.

The through bores 66a, 68a of the first and second attachment parts 66, 68 have top ends positioned above the axis of rotation and bottom ends positioned below the axis of rotation and, therefore, are formed to have relatively long lengths. In particular, the through bore of the first attachment part 66 is formed to have a length longer than that of the threaded hole 62a. Further, the through bore of the second attachment part 68 is formed to have a length longer than that of the threaded hole 64a. Furthermore, each of the first and second attachment parts 66, 68 has a bottom end that is positioned below the axis of rotation of the electric motor M.

By way of example, when a load is transmitted from the second mount part M2 to the third mount part M3, the load is transferred not only through the wall surface of the engine E, but also through the first electric motor couplable part 62, the upper circumferential wall of the casing 60 of the electric motor M, the lower circumferential wall of the casing 60 of the electric motor M, the second electric motor couplable part 64, and the third supportable part 56 in this order, all the way to the second mount part M2. In particular, in a side view of the vehicle body, the imaginary straight line connecting the second mount part M2 and the third mount part M3 passes through the casing 60 of the electric motor. This configuration can facilitate the transfer of a load through the circumferential wall of the casing 60 of the electric motor M.

Further, the imaginary straight line connecting the second mount part M2 and the third mount part M3 passes through the vicinity of the center of the casing 60 of the electric motor M. This configuration can facilitate the transfer of a load through both of the upper circumferential wall and the lower circumferential wall of the casing 60 of the electric motor M, thereby contributing to the use of the casing 60 of the electric motor M as a rigid member. Moreover, the crankcase 22 is formed such that a middle portion thereof in a longitudinal direction of the vehicle is recessed downwards to thereby bring the axis of rotation of the electric motor M closer to the crankcase 22. This configuration can facilitate the transfer of a load through the upper circumferential wall of the casing 60 of the electric motor M as well. The first and second attachment parts 66, 68 extend on both sides of the axis of rotation in a vertical direction, thereby facilitating the transfer of a load through the circumferential wall of the electric motor M via the first and second attachment parts 66, 68.

The circumferential ribs 69a include a rib extending in such a manner to bridge the first attachment part 66 and the second attachment part 68. A load is transferred between the first attachment part 66 and the second attachment part 68 through the rib on the casing 60 of the electric motor M, thereby counteracting possible deformations of the casing 60 of the electric motor M. This also facilitates the role of the casing 60 of the electric motor M as a rigid member. Further, the casing 60 of the electric motor M includes a cylindrically shaped component. This can counteract possible deformations of the casing 60 of the electric motor M, in a better fashion than the instances where arcuate casing elements split along an axis of the vehicle are combined to form a casing of an electric motor. This also facilitates the role of the casing 60 of the electric motor M as a rigid member. Since the through bores of the first attachment part 66 and the second attachment part 68 are formed to have long lengths, the transfer of a load in the electric motor M in a vertical direction through the first attachment part 66 and the second attachment part 68 can be facilitated, thereby promoting the advantageous use of the electric motor M as a rigid member.

Turning to Fig. 1, the electric motor M thus plays the role of a rigid member which adds stiffness to the vehicle body frame FR to thereby contribute to the rigidity of the vehicle body as a whole. Consequently, a required rigidity of the frame can be secured without increasing the size of the vehicle body frame FR or additionally providing a reinforcing frame. Thus, a frame can be dispensed with in the region on the vehicle widthwise outside of the electric motor M, for example. In the instant embodiment, the vehicle body frame FR does not overlap with the electric motor M, as viewed laterally. That is, the vehicle body frame FR is not disposed on the vehicle widthwise outside of the electric motor M. In other words, the vehicle body frame FR is arranged so as to be absent from a space overlapping with the electric motor M, in a side view of the vehicle body.

In the space on the vehicle widthwise outside of the electric motor M without the vehicle body frame FR, it is possible for various components to be disposed in such a manner to avoid any interference with the vehicle body frame FR. For instance, a harness H can be disposed on the vehicle widthwise outside of the electric motor M. While the thickness of a harness H makes it difficult to secure the space for positioning the same in a hybrid vehicle, the vehicle widthwise outside of the electric motor M is available in the instant embodiment for installing a hardness H in place.

Aside from a harness, particular examples of the various components to be disposed on the vehicle widthwise outside of the motor may also include components related to the motor. Such components related to the motor may include a drive inverter for the motor, a sensor related to the motor, a control device connected to the motor, a connector for the motor, and a transfer member for transferring power from the motor to the speed reducer. Since a frame is dispensed with in the region on the vehicle widthwise outside of the motor, the same space can be secured for positioning a component related to the motor on the vehicle widthwise outside of the motor to thereby establish the connection between the motor and the related component in a less cumbersome fashion. The various components to be disposed on the vehicle widthwise outside of the motor may also include components not related to the motor. Examples can include a connector for a starter generator, a connector for a DC/DC converter, a canister, a fuse, and a relay.

Further, turning to Fig. 3, the electric motor M is coupled to the engine E with bolts 70 oriented in a vertical direction and, therefore, can be prevented from being displaced out of alignment about vehicle widthwise axes - namely, prevented from pivoting about fasteners T2 oriented in a vehicle widthwise direction at the engine mount parts M2, M3. In particular, better support stiffness for the electric motor is also achieved than in the instances where an electric motor M is supported in a cantilevered fashion by an engine E with a bolt oriented in a vehicle widthwise direction.

The power unit PU is supported by the vehicle body frame FR, at opposite sides of the electric motor M in a longitudinal direction of the vehicle. Thus, when a load is transmitted through the power unit PU in a longitudinal direction of the vehicle, the electric motor M of the power unit PU can be used as a rigid member that participates in the transmission of the load in the longitudinal direction of the vehicle. Consequently, a reduction of the rigidity of the vehicle can successfully be prevented, while at the same time obviating the need to increase the rigidity of the vehicle body frame FR itself.

For this reason, the vehicle body frame FR can be constructed not to overlap with the electric motor M, as viewed laterally. By thus having the vehicle body frame FR extend so as to be absent from a space overlapping with the electric motor M as viewed laterally, any interferences between the vehicle body frame FR and vehicle components disposed on the vehicle widthwise outside of the electric motor M can be avoided. Consequently, installation of components around the electric motor M can be facilitated, thereby raising the level of freedom in the arrangement of those components.

Turning to Fig. 3, the first electric motor couplable part 62 of the engine E is located adjacent to the second supportable part 52. Further, the second electric motor couplable part 64 of the engine E is located adj acent to the third supportable part 56. Thus, the distances between the supportable parts 52, 56 and the electric motor couplable parts 62, 64 may be shortened to thereby facilitate the directing, into the electric motor M, of a load applied to the supportable parts 52, 56. The supportable parts 52, 56 and the electric motor couplable parts 62, 64 may be arranged in close proximity by being formed to be located in the same positions in at least one of a longitudinal direction of the vehicle and a vertical direction. Moreover, the close proximity arrangement can be achieved by disposing the second supportable part 52 such that it is located between the first electric motor couplable part 62 and a base point on the frame body which connects to the second supportable part 52 (i.e., the point of connection between the first frame piece 1a and the fourth frame piece 48). The close proximity arrangement may be achieved by disposing the third supportable part 56 such that it is located between the second electric motor couplable part 62 and a base point on the frame body which connects to the third supportable part 56 (i.e., the point of connection between the second cross pipe 7 and a respective one of the first stays 53).

Further, with respect to a longitudinal direction of the vehicle, the first and second electric motor couplable parts 62, 64 are located between the first supportable part 54 and the second supportable part 56. For this reason, during the transmission of a load between the first supportable part 54 and the second supportable part 56, the transfer of the load through the casing 60 of the electric motor M can be facilitated via the first electric motor couplable part 62 and the second electric motor couplable part 64. In this way, the use of the electric motor M as a rigid member is promoted.

Turning to Fig. 1, the casing 60 of the electric motor M is secured at front and rear ends thereof to the engine E. Thus, the transfer of a load between the front end and the rear end of the casing 60 of the electric motor M can be facilitated through the secured portions of the casing 60 of the electric motor M. This allows the casing 60 of the electric motor M to be used as a rigid member in line with the use of the power unit PU as a rigid member. Further, the casing 60 of the electric motor M includes a rib 69 extending in a circumferential direction in such a way to connect the front and rear ends of the casing 60 of the electric motor M. When a load is transmitted between the front end and the rear end of the casing 60 of the electric motor M, such a rib 69 enables the load to be transferred not only through the body of the casing but also through the rib 69, thereby contributing to the rigidity of the vehicle body frame as a whole.

The engine E is supported at the rear portion of the cylinder 23 and the upper portion of the speed reducer housing 25 by the vehicle body frame FR. This configuration can position the electric motor M adjacent to a portion of the engine E which is supported by the frame FR, thereby promoting the use of the electric motor M as a rigid member.

The present disclosure encompasses the following first to seventh aspects:
[1st Aspect] A saddle-riding vehicle according to the first aspect, which includes:
   front and rear wheels 8, 16;
   a power unit PU including an engine E which is located between the front and rear wheels 8, 16 and produces drive power, and an electric motor M which is secured to the engine E and produces drive power; and
   a vehicle body frame FR supporting the power unit PU, at opposite sides of the electric motor M in a longitudinal direction of the vehicle.
[2nd Aspect] The saddle-riding vehicle according to the first aspect, in which the vehicle body frame FR is arranged so as to be absent from a space overlapping with the electric motor M, as viewed laterally.
[3rd Aspect] The saddle-riding vehicle according to the first or second aspect, in which the engine E includes an electric motor couplable part 62, 64 at which the electric motor M is coupled and a supportable part 52, 56 which is supported by the vehicle body frame FR, and the electric motor couplable part 62, 64 is located adjacent to the supportable part 52, 56.
[4th Aspect] The saddle-riding vehicle according to any one of the first to third aspects, in which:
   the engine E includes a first electric motor couplable part 62 at which the electric motor M is coupled at a front portion thereof, a second electric motor couplable part 64 at which the electric motor M is coupled at a rear portion thereof, and at least two supportable parts 52, 56 which are supported by the vehicle body frame and are separated from each other in the longitudinal direction of the vehicle; and
   the first and second electric motor couplable parts 62, 64 are located between two of the supportable parts 52, 56 separated from each other in the longitudinal direction of the vehicle.
[5th Aspect] The saddle-riding vehicle according to any one of the first to fourth aspects, in which the electric motor M defines an axis AX2 of rotation extending in a vehicle widthwise direction, and the electric motor M includes a casing 60 secured at front and rear ends thereof to the engine E.
[6th Aspect] The saddle-riding vehicle according to the fifth aspect, in which the casing 60 of the electric motor M includes a rib 69 extending in a circumferential direction.
[7th Aspect] The saddle-riding vehicle according to any one of the first to sixth aspects, in which:
   the engine E includes a crankshaft 20, a cylinder 23 extending upwards of the crankshaft 20, and a speed reducer housing 25 which is located rearwards of the crankshaft 20 and in which a speed reducer G is housed,
   the electric motor M is positioned rearwards of the cylinder 23 and upwards of the speed reducer housing 25, and
   the engine E is supported at a rear portion of the cylinder 23 and an upper portion of the speed reducer housing 25 by the vehicle body frame FR.

The aforementioned embodiments are some of non-limiting embodiments of the present disclosure, and various additions, modifications, or omissions can be made therein without departing from the principle of the present disclosure. While either one of the three types of driving mode including a driving mode in which only the engine is used, a driving mode in which only the motor is used, and a driving mode in which both the engine and the motor are used can be selected in the aforementioned embodiments, this is not a requirement. For example, only a single driving mode in which both the engine and the motor are used may be available. Further, the motor may serve as an assist motor used to increase the output of the power unit during acceleration. Moreover, the motor may serve as a generator motor used to recover inertial energy from propulsion during deceleration. Hence, applications include any type of saddle-riding vehicles installed with a motor or a generator. Thus, applications include vehicles that may operate in a driving mode different from a hybrid mode.

The vehicle body frame may include a monocoque frame in addition or as an alternative to a pipe frame. While, in the aforementioned embodiments, no frame piece is present on the vehicle widthwise outside of the motor as laterally viewed, a frame piece can still be disposed on the vehicle widthwise outside of the motor as laterally viewed. Even in such a case, the casing of the electric motor can play the role of a rigid member, thereby promoting the use of a frame piece having a lower rigidity than those of the remainder of frame pieces as a frame piece to be disposed on the widthwise outside of the motor.

While a two-cylinder engine is used for the engine of the power unit of the saddle-riding vehicle in the aforementioned embodiments, a single-cylinder engine or a three or more-cylinder engine may be used therefor. While the aforementioned embodiments have been discussed in the context of a motorcycle, non-limiting examples of the saddle-riding vehicle also include a three-wheeled vehicle and a four-wheeled buggy. Accordingly, such variants are also encompassed within the scope of the present disclosure.

## Claims

1. A saddle-riding vehicle comprising:
front and rear wheels;
a power unit including an engine which is located between the front and rear wheels and produces drive power, and an electric motor which is secured to the engine and produces drive power; and
a vehicle body frame supporting the power unit, at opposite sides of the electric motor in a longitudinal direction of the vehicle.

2. The hybrid saddle-riding vehicle as claimed in claim 1, wherein the vehicle body frame is arranged so as to be absent from a space overlapping with the electric motor, as viewed laterally.

3. The saddle-riding vehicle as claimed in claim 1 or 2, wherein the engine includes an electric motor couplable part at which the electric motor is coupled and a supportable part which is supported by the vehicle body frame, and the electric motor couplable part is located adjacent to the supportable part.

4. The saddle-riding vehicle as claimed in any one of claims 1 to 3, wherein
the engine includes a first electric motor couplable part at which the electric motor is coupled at a front portion thereof, a second electric motor couplable part at which the electric motor is coupled at a rear portion thereof, and at least two supportable parts which are supported by the vehicle body frame and are separated from each other in the longitudinal direction, and
the first and second electric motor couplable parts are located between two of the supportable parts separated from each other in the longitudinal direction.

5. The saddle-riding vehicle as claimed in any one of claims 1 to 4, wherein the electric motor defines an axis of rotation extending in a vehicle widthwise direction, and the electric motor includes a casing secured at front and rear ends thereof to the engine.

6. The saddle-riding vehicle as claimed in claim 5, wherein the casing of the electric motor includes a rib extending in a circumferential direction.

7. The saddle-riding vehicle as claimed in any one of claims 1 to 6, wherein
the engine includes a crankshaft, a cylinder extending upwards of the crankshaft, and a speed reducer housing which is located rearwards of the crankshaft and in which a speed reducer is housed,
the electric motor is positioned rearwards of the cylinder and upwards of the speed reducer housing, and
the engine is supported at a rear portion of the cylinder and an upper portion of the speed reducer housing by the vehicle body frame.
